# EUROPEAN PATENT SPECIFICATION

(11) **EP 3 335 594 B1**
(45) Date of publication and mention of the grant of the patent: **22.05.2019**
(21) Application number: 17199649.9
(22) Date of filing: 02.11.2017
(51) Int. Cl.: A47B 95/00

(54) **ADJUSTABLE CONCEALED HANGING DEVICE FOR FURNITURE WITH ANTI-TIPPING SAFETY FEATURE**
VERSTELLBARE AUFHÄNGVORRICHTUNG FÜR MÖBEL MIT ANTI-KIPPSICHERHEIT
DISPOSITIF DE SUSPENSION RÉGLABLE POUR MEUBLE AVEC SYSTEME DE SÉCURITÉ ANTI-BASCULEMENT

(30) Priority: 15.12.2016 ES 201631597 P
(43) Date of publication of application: 20.06.2018
(73) Proprietor: Industrias Auxiliares, S.A., 20808 Guipuzcoa (ES)
(72) Inventor: ARRILLAGA ALBENIZ, Ander, 20802 Guipuzcoa (ES)
(74) Representative: Izquierdo Blanco, Maria Alicia

(56) References cited:
- WO-A1-2010/121687
- DE-U1- 9 201 572
- US-A1- 2011 174 939

## Description

### FIELD OF THE INVENTION

This invention relates to an adjustable concealed hanging device for furniture with an anti-tipping safety feature, of the type used for mounting kitchen furniture and the like, having a hanging hook that hooks onto a support plate screwed to the wall.

### PRIOR ART

Currently, and with reference to the prior art, it is commonly known to use furniture hanging devices for mounting kitchen furniture and the like, having a hanging hook that hooks onto a support plate screwed to the wall. This is the case of Spanish patent publication number ES 2160024.

Additionally, there are hanging devices that prevent wall furniture from being released from the support plate screwed to a wall, through the use of additional members as in the case of European Patent EP 2745739 A1 or in the case of DE 92 01 572 U1, which has protuberances made within the body of the hanging hook, which act as stops against the base of the wall support plate; however, these models have the drawback that, owing to their rigidity, they make it difficult both to mount them and to be able to remove them since their securing operation would depend on having accurate adjustment and, furthermore, by acting on the base of the support plate, the bearing surface is smaller and therefore the risk of tipping is greater.

There are also models that use flexible members attached to the body of the hanging hook, and said flexible members, in turn, hook a fixed support onto the furniture, these members acting on the underside of the support plate to prevent tipping. These models, available on the market, have certain drawbacks. On the one hand there is the fact that when there are at least two additional members required to produce the anti-tipping safety feature, fitting and removal is more laborious, which complicates the process and increases the risk of tipping; and they also act on the underside of the support plate where the contact surface is very small, making it difficult to lock properly.

### EXPLANATION OF THE INVENTION AND ADVANTAGES

To address this situation, the present invention relates to an adjustable concealed hanging device for furniture with an anti-tipping safety feature, of the type used for mounting kitchen furniture and the like, as defined in the claims and having a hanging hook that hooks onto a support plate screwed to the wall; and, together with the hanging hook, there is a V-shaped resilient shim with a broad upper edge, which upper edge, at the time of mounting, is located opposite the underside of the bend in the support plate.

This configuration results in greater safety, since accidental tipping of the furniture is prevented by the V-shaped resilient shim being locked against the support plate screwed to the wall. In this way, thanks to the V configuration of the V-shaped resilient shim, installation can take place without any additional manoeuvres, owing to its flexibility and simply through the action of gravity, making fitting easier and ensuring mounting as soon as it is positioned. Thus, the configuration of the V-shaped resilient shim results in a function of self-secured mounting that requires no additional manoeuvres; in addition to easy fitting, this involves an additional safety feature, since the V-shaped resilient shim is self-secured through the broad upper edge thereof being self-hooked onto the support plate and owing to the resilience of the V-shaped resilient shim, which will automatically be retracted in contact with the head of the anchoring coach screw on fitting. In this way, this invention makes it impossible to forget the securing operation since this is done automatically simply by inserting the hanging device. Furthermore, owing to its broad upper edge, the V-shaped resilient shim even acts together with the coach screw for anchoring the support plate screwed to the wall, making for easy uninterrupted sideways movement with said coach screw, this being due to its great width, which permits greater sideways movement.

Another special feature of the invention is that the angular position of the V-shaped resilient shim can be varied with a deactivation protrusion for the screw-slotted head shaft present on the hanging hook. It is thereby possible to vary the angular position of the V-shaped resilient shim, which is retracted until the hanging hook contacts the wall, and removal is very simple, without the drawback that it can interfere with the coach screw for anchoring the support plate screwed to the wall, as happens in other implementations in which the deactivation movement is rotary.

Finally, another special feature of the invention is that the V-shaped resilient shim has spring pins on its sides.

This results in double securing, since said pins ensure that the V-shaped resilient shim is always in the activation position through the hanging hook having a spring effect against the wall, such that it is impossible to forget to fix the V-shaped resilient shim in its activation position during the furniture mounting manoeuvre.

### DRAWINGS AND REFERENCE NUMERALS

To get a better understanding of the nature of the invention, the attached drawings illustrate an industrial embodiment solely by way of explanatory, non-restrictive example.

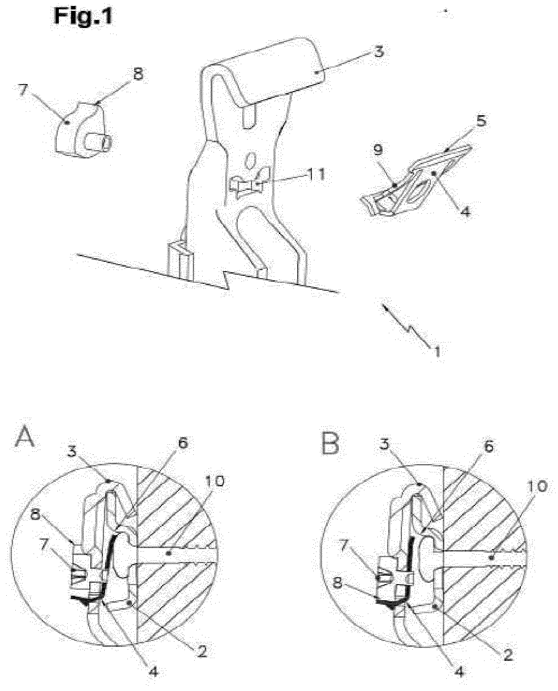

Fig. 1 shows a perspective view of the hanging device (1), with a view of the V-shaped resilient shim (4) and the screw-slotted head shaft (7) before being attached to the hanging hook (3). The perspective view of the V-shaped resilient shim (4) shows the broad upper edge (5). And the perspective view of the screw-slotted head shaft (7) shows the deactivation protrusion (8) for said screw-slotted head shaft (7).

The lower details of Fig. 1 give a view, in detail A, of a longitudinal mid-section of the hanging device (1), in which the V-shaped resilient shim (4) (marked in black) can be seen, this being located in the activated position. Conversely, detail B is a detail as a longitudinal mid-section of the hanging device (1), the V-shaped resilient shim (4) (marked in black) in this case being located in the deactivated position and retracted by actuating the deactivation protrusion (8) of the screw-slotted head shaft (7).
1. Hanging device.
2. Support plate.
3. Hanging hook
4. V-shaped resilient shim.
5. Upper edge of the V-shaped resilient shim (4).
6. Bend in the support plate (2).
7. Screw-slotted head shaft.
8. Deactivation protrusion of the screw-slotted head shaft (7).
9. Spring pins.
10. Anchoring coach screw.
11. Slot.

### DESCRIPTION OF A PREFERRED EMBODIMENT

In relation to the drawings and reference numerals listed above, a preferred embodiment of the subject-matter of the invention is illustrated in the attached drawings, referring to an adjustable concealed hanging device for furniture with an anti-tipping safety feature, of the type used for mounting kitchen furniture and the like, comprising a hanging hook (3) to be connected to the furniture that hooks onto a support plate (2) to be screwed to the wall, the support plate (2) having a bend (6) and to be screwed to the wall by an anchoring coach screw (10) located below the bend (6), wherein the hanging hook (3) has a V-shaped resilient shim (4) with a broad upper edge (5), which upper edge (5), when the hanging device (1) is in the mounted position, is located at the underside of the bend (6) in the support plate (2), preventing the hanging hook (3) from coming out of the support plate (2) when not intended, and wherein the V-shaped resilient shim (4) is fitted into the hanging hook (3) in a slot (11), with enough play to allow its angular position to be changed.

Fig. 1 shows an isometric view of the whole hanging device (1), showing the V-shaped resilient shim (4) before it is connected to the hanging hook (3). Said V-shaped resilient shim (4) is fitted into the hanging hook (3) in the slot (11), with enough play to allow its angular position to be changed. Fig. 1 also shows the screw-slotted head shaft (7), which is connected to the hanging hook (3) by its rear portion, and is located above the V-shaped resilient shim (4). Once the whole hanging device (1) is fitted, the hanging manoeuvre entails the upper edge (5) of the V-shaped resilient shim (4) being positioned directly opposite the underside of the bend (6) in the support plate (2), where it fits because of its flexibility, with the advantage of not requiring any additional manoeuvre; it simply falls towards the side of the wall through the action of gravity, thus securing the hanging device (1) and preventing the hanging hook (3) from coming out of the support plate (2) when not intended. If it is necessary to make a sideways adjustment of the furniture and thus the corresponding hanging device (1) on the support plate (2), because the V-shaped resilient shim (4) has a wide upper edge (5), said V-shaped resilient shim (4) does not interfere with the anchoring coach screw (10), since it can rest against the latter and secure the hanging device (1), and also prevent the furniture from coming out accidentally through a vertical movement.

Detail A of Fig. 1 is a detail in longitudinal mid-section of the hanging device (1), in which the hanging device (1) is shown when fitted, with the V-shaped resilient shim (4) in the activated position with its upper edge (5) opposite the bend (6) in the support plate (2), and said V-shaped resilient shim (4) resting on the anchoring coach screw (10) as described above.

For additional securing, as can be seen in the perspective view of the V-shaped resilient shim (4) in Fig. 1, the V-shaped resilient shim (4) has at its sides some spring pins (9) that act as a spring, moving the V-shaped resilient shim (4) into its activated position, thus making it impossible to forget to place the anti-tipping feature produced by the V-shaped resilient shim (4) in the correct position in the event that it is not correctly placed through the action of gravity. Thus making fitting easy and giving the hanging device (1) double securing to prevent the accidental tipping of the furniture.

If, on the other hand, it is wished to remove the furniture from the wall, in order to release the hanging hook (3) from the support plate (2), it is necessary to deactivate the anti-tipping feature produced by the V-shaped resilient shim (4). In this case, a screwdriver is used to act on the screw-slotted head shaft, turning until the deactivation protrusion (8) interferes with the V-shaped resilient shim (4) so that it changes its angular position and the hanging hook (3) is retracted until it contacts the wall. This makes it easy for the hanging hook (3) to come out of the support plate (2) without the V-shaped resilient shim (4) interfering with the anchoring coach screw (10) in this manoeuvre. This deactivated position of the V-shaped resilient shim can be seen in detail B of Fig. 1, showing the deactivation protrusion (8) of the screw-slotted head shaft (7) in contact with the V-shaped resilient shim (4).

The essential features of this invention are not altered by variations in materials, shape, size or arrangement of the component elements, which are described non-restrictively, this being sufficient for reproduction by a skilled person.

## Claims

1. Adjustable concealed hanging device for furniture with an anti-tipping safety feature, of the type of hanging devices used for mounting kitchen furniture and the like, comprising a hanging hook (3) to be connected to the furniture and that hooks onto a support plate (2) to be screwed to the wall, the support plate (2) having a bend (6) and to be screwed to the wall by an anchoring coach screw (10) located below the bend (6), **characterised in that** the hanging hook (3) has a V-shaped resilient shim (4) with a broad upper edge (5), which upper edge (5), when the hanging device (1) is in the mounted position, is located at the underside of the bend (6) in the support plate (2) preventing the hanging hook (3) from coming out of the support plate (2) when not intended, and wherein the V-shaped resilient shim (4) is fitted into the hanging hook (3) in a slot (11), with enough play to allow its angular position to be changed.

2. Adjustable concealed hanging device for furniture with an anti-tipping safety feature according to claim 1, wherein the angular position of the V-shaped resilient shim (4) is capable of being changed with a deactivation protrusion (8) of the screw-slotted head shaft (7) present on the hanging hook (3).

3. Adjustable concealed hanging device for furniture with an anti-tipping safety feature according to the previous claims, wherein the V-shaped resilient shim (4) has spring pins (9) on its sides.

## Patentansprüche

1. Einstellbare unsichtbare Hängeeinrichtung für Möbel mit einem anti-Kipp-Sicherheitsmerkmal, des Typs von Hängeeinrichtungen, die zur Befestigung von Küchenmöbel und dergleichen verwendet werden, umfassend, einen Hängehaken (3) zur Verbindung mit dem Möbel und zum Einhaken an eine Trägerplatte (2), die an die Wand geschraubt werden soll, worin die Trägerplatte (2) eine Biegung (6) aufweist und mittels unter der Biegung (6) vorgesehener Ankerschienenschrauben (10) an die Wand befestigt werden soll, **dadurch gekennzeichnet, dass** der Hängehaken (3) eine V-förmige Klemmscheibe (4) mit einer breiten oberen Kante (5) aufweist, worin die obere Kante (5), wenn sich die Hängeeinrichtung (1) in der befestigten Position befindet, an der Unterseite der Biegung (6) in der Trägerplatte (2) angeordnet ist, wodurch verhindert wird, dass der Hängehaken (3) unbeabsichtigterweise aus der Trägerplatte (2) herauskommt, und worin die V-förmige Klemmscheibe (4) in den Hängehaken (3) in einem Schlitz (11) mit ausreichend Spiel eingepasst ist, so dass die Winkelposition geändert werden kann.

2. Einstellbare unsichtbare Hängeeinrichtung für Möbel mit einem anti-Kipp-Sicherheitsmerkmal nach Anspruch 1, worin die Winkelposition der V-förmigen Klemmscheibe (4) geändert werden kann, worin an den Hängehaken (3) ein Deaktivierungs-Überstand (8) des Schlitzschrauben--Kopfschafts (7) vorhanden ist.

3. Einstellbare unsichtbare Hängeeinrichtung für Möbel mit einem anti-Kipp-Sicherheitsmerkmal nach einem der vorstehenden Ansprüche, worin die V-förmigen Klemmscheibe (4) an deren Seite Federstifte (9) aufweist.

## Revendications

1. Dispositif de suspension dissimulé réglable pour meuble doté d'un élément de sécurité anti-basculement, du type de dispositifs de suspension utilisés pour monter un meuble de cuisine et similaire, comprenant un crochet de suspension (3) à raccorder au meuble et qui s'accroche sur une plaque de support (2) à visser au mur, la plaque de support (2) ayant un coude (6) et étant à visser au mur par un tire-fond d'ancrage (10) situé en dessous du coude (6), **caractérisé en ce que** le crochet de suspension (3) comporte une cale résiliente en forme de V (4) dotée d'un bord supérieur large (5), lequel bord supérieur (5), lorsque le dispositif de suspension (1) est dans la position montée, est situé au niveau de la face inférieure du coude (6) dans la plaque de support (2) empêchant le crochet de suspension (3) de sortir de la plaque de support (2) par accident, et dans lequel la cale résiliente en forme de V (4) est ajustée dans le crochet de suspension (3) dans une fente (11), avec suffisamment de jeu pour permettre de changer sa position angulaire.

2. Dispositif de suspension dissimulé réglable pour meuble doté d'un élément de sécurité anti-basculement selon la revendication 1, dans lequel la position angulaire de la cale résiliente en forme de V (4) est capable d'être changée avec une protubérance de désactivation (8) de la tige à tête fendue de vis (7) présente sur le crochet de suspension (3).

3. Dispositif de suspension dissimulé réglable pour meuble doté d'un élément de sécurité anti-basculement selon les revendications précédentes, dans lequel la cale résiliente en forme de V (4) comporte des goupilles élastiques (9) sur ses côtés.
